Europäisches Patentamt

European Patent Office

Office européen des brevets

(11) Veröffentlichungsnummer: **0 485 756 A1**

# EUROPÄISCHE PATENTANMELDUNG

(21) Anmeldenummer: **91117709.5**

(51) Int. Cl.⁵: **B23D 79/04**

(22) Anmeldetag: **17.10.91**

(30) Priorität: **30.10.90 DE 4034466**

(43) Veröffentlichungstag der Anmeldung:
**20.05.92 Patentblatt 92/21**

(84) Benannte Vertragsstaaten:
**AT BE DE DK ES FR GB IT NL SE**

(71) Anmelder: **PLAKOMA Planungen und
Konstruktionen von maschinellen
Einrichtungen GmbH
Berliner Strasse 3
W-6638 Dillingen/Saar(DE)**

(72) Erfinder: **Braun, Ernst, Dipl.-Ing.
Stolpmünderweg 3
W-6638 Dillingen/Saar(DE)**
Erfinder: **Wojciechowski, Jürgen
Hedwigstrasse 10
W-6638 Dillingen/Saar(DE)**

(74) Vertreter: **Vièl, Georg, Dipl.-Ing.
Patentanwalt Weinbergweg 15
W-6600 Saarbrücken(DE)**

(54) **Vorrichtung zum Entfernen von Brennbärten an Brennschneidkanten von Metallteilen.**

(57) Es handelt sich um eine Vorrichtung zum Entfernen von Brennbärten (8a + 8b) Brennschneidkanten von Metallteilen (4) mit einer mit Werkzeugen (2) versehenen drehangetriebenen Welle (1).

Um einen sicheren, störungsarmen Betrieb zu ermöglichen und um kurze Späne zu erhalten, wird die Welle (1) auf ihrem Umfang mit Schneidwerkzeugen (2) bestückt und eine Höhenverstellung der Welle vorgesehen. Mit einer versetzten Anordnung von jeweils einem, zwei, drei oder noch mehr Schneidwerkzeugen auf einer axialen Linie können auch gebogene Metallteile von Brennbärten befreit werden.

FIG.1

EP 0 485 756 A1

Die Erfindung betrifft eine Vorrichtung zum Entfernen von Brennbärten an Brennschneidkanten von Metallteilen, insbesondere Brammen, Blöcken, Knüppeln oder anderem Halbzeugmaterial, mit einer mit Werkzeugen versehenen drehangetriebenen Welle.

Brennbärte entstehen bei autogenen Trennvorgängen und liegen danach als Grat aus Schlacke und/oder geschmolzenem oder abgerissenem Material an der Unterseite des Metallteils vor. Beim anschließenden Transport durch den Aufheizofen und beim Walzprozeß ist dieser Brennbart hinderlich und führt zu Störungen und Qualitätsminderungen. Es ist deshalb meistens erforderlich, den Brennbart einwandfrei zu entfernen oder zu glätten.

Es ist bereits bekannt, im Zuge des die Bramme transportierenden Rollgangs eine drehangetriebene Welle mit mehreren daran pendelnd beweglich nebeneinander befestigten Hämmern vorzusehen, wobei die Bewegungsbahn der Hämmer tangential zu der den Grat aufweisenden Brammenkante und rechtwinklich zu dem dort befindlichen Grat verläuft (DE-OS 37 00 207).

Diese Vorrichtung hat jedoch mehrere Nachteile. Sie ist mechanisch aufwendig und daher relativ empfindlich, da sehr viele bewegte Teile vorhanden sind. Außerdem besteht die Gefahr, daß einer der Hämmer sich löst oder ein Teil davon abbricht und Personen- oder Sachschäden verursacht. Schließlich entstehen beim Abschlagen des Brennbartes lange Brennbartstücke, was deren Entsorgung erschwert.

Aufgabe der Erfindung ist es, eine Vorrichtung zu schaffen, die auf mechanisch einfache und sichere Weise Brennbärte entfernt und mit der eine kurze Spanlänge erzielbar ist.

Diese Aufgabe wird bei einer Vorrichtung der eingangs näher bezeichneten Art erfindungsgemäß dadurch gelöst, daß die Werkzeuge als am Umfang der Welle angeordnete Schneidwerkzeuge ausgebildet sind.

Eine Ausbildung der Erfindung besteht darin, daß die Welle senkrecht zur Unterseite der Metallteile verstellbar ist.

Es ist erfindungsgemäß sinnvoll, daß die Schneidwerkzeuge als radial auf der Welle angeordnete zylindrische Körper ausgebildet sind.

Es kann auch zweckmäßig sein, daß die Schneidwerkzeuge als radial auf der Welle angeordnete rechteckige Körper ausgebildet sind.

Eine weitere Ausführung der Erfindung besteht darin, daß die Schneidwerkzeuge als radial auf der Welle angeordnete längliche Körper ausgebildet sind.

Es kann auch vorgesehen sein, daß die Schneidwerkzeuge als radial auf der Welle angeordnete quadratische Körper ausgebildet sind.

Eine Weiterbildung der Erfindung besteht darin, daß auf der Welle Transportnoppen vorgesehen sind.

Außerdem liegt es im Rahmen der Erfindung, daß die Drehgeschwindigkeit der Welle regelbar ist.

Des weiteren besteht eine erfindungsgemäße Ausbildung der Erfindung darin, daß die Schneidwerkzeuge versetzt der Welle angeordnet sind.

Ferner ist es möglich, daß die Schneidwerkzeuge mit einer Federung versehen sind.

Schließlich ist es erfindungsgemäß, daß die Welle in axialer Richtung pulsierend oder kontinuierlich verschiebbar ist.

Die Vorteile der Erfindung bestehen im wesentlichen darin, daß eine wartungsarme Vorrichtung mit wenig bewegten Teilen geschaffen wird, die zudem gewünscht kurze Stücke erzeugt.

Die Zeichnungen geben ein Ausführungsbeispiel der Erfindung wieder.

Es zeigt

Fig. 1    eine Ansicht der gesamten Vorrichtung,

Fig. 2    eine Teilansicht des Schneidebereichs mit Brennbärten und Schneidwerkzeug,

Fig. 3    eine Abwicklung der mit Schneidwerkzeugen versehenen Welle,

Fig. 4    schematisch die Brennbartentfernung an einem durchgebogenen Metallteil.

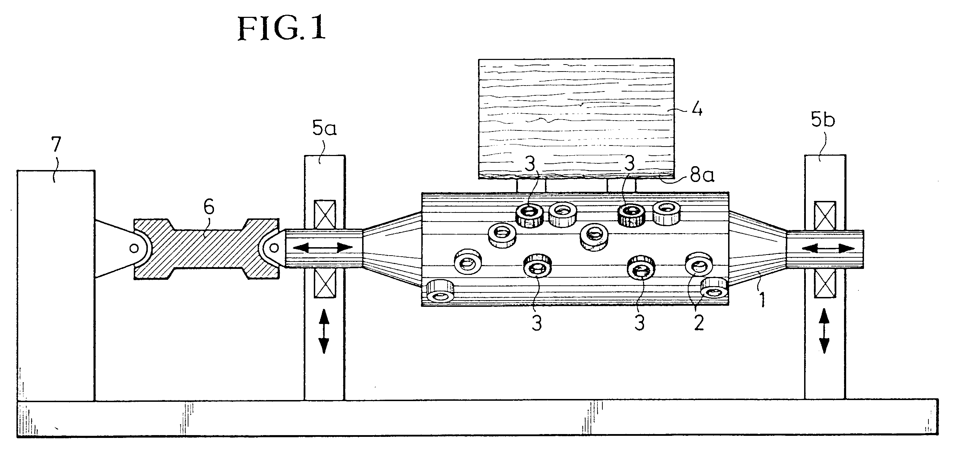

In Fig. 1 ist die Welle 1, beidseitig höhenverstellbar und in axialer Richtung pulsierend oder kontinuierlich verschiebbar in den Aufhängungen 5a und 5b befestigt, unter einem Metallteil 4 dargestellt. Auf der Welle 1 sind die hier runden Schneidwerkzeuge 2 so angeordnet, daß jeweils zwei Schneidwerkzeuge 2 auf einer in axialer Richtung verlaufenden Linie auf dem Umfang der Welle 1 liegen. Die Transportnoppen 3 dienen der Abstützung beim Bewegen des Metallteiles 4 nach dem Bartentfernen. Die Welle 1 wird über eine Kardanwelle 6 mit einem Antriebsaggregat 7 verbunden, das entweder vorwärts oder rückwärts drehen kann.

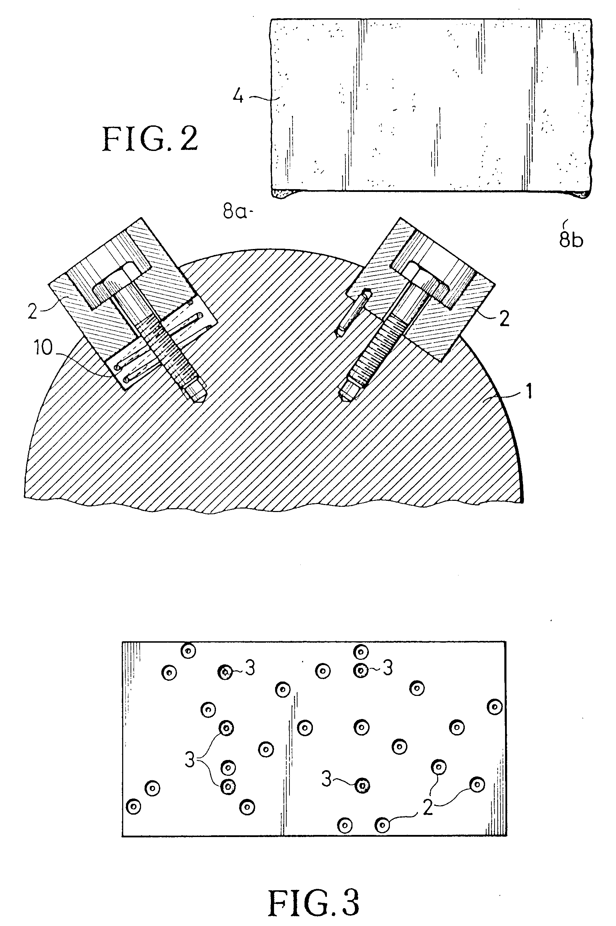

Die Brennbärte 8a, 8b (Fig. 2) werden wie folgt entfernt: Das Metallteil 4, beispielsweise eine (Stahl-) Bramme, wird so weit über die tiefgefahrene Welle 1 gefahren, bis der Brennbart 8a über der Wellenmitte steht. Dieses Verfahren erfolgt über die normalerweise bereits bestehende Transporteinrichtung (Rollgang), in die die Brennbartentfernungsvorrichtung eingebaut wird. Dann wird das Metallteil 4 in dieser Position gehalten, die Welle 1 wird hochgefahren und durch eine komplette Umdrehung der Welle 1 wird der Brennbart 8a auf der ganzen Länge des Metallteils 4 in kleinen Stücken abgetragen. Dann wird die Welle 1 wieder tiefgefahren, das Metallteil 4 weitertransportiert und der Brennbart 8b am Fuß des Metallteils 4 auf analoge Weise, jedoch mit anderer Drehrichtung, entfernt.

Fig. 2 zeigt, wie dieses Entfernen im Detail erfolgt: Die auf der Welle 1 sitzenden Schneidwerkzeuge 2 biegen den meist nur an der Stelle 9 mit dem Metallteil 4 festverbundenen Brennbart 8a nach vorn, wobei dieser aufgrund seiner Sprödheit abbricht und schneiden die Vorderkante des Metallteils 4 gerade. Die Schneidwerkzeuge 2 sind leicht auswechselbar und dennoch sicher mit der Welle 1 verbunden. Sie sind als längliche Körper ausgebildet, die einen runden, rechteckigen, quadratischen oder länglichen Querschnitt haben und deren Längsachse radial zur Welle verläuft. Die Schneidwerkzeuge 2 können auch in abgefederter Weise auf der Welle 1 angebracht sein, wie ebenfalls in Fig. 2 dargestellt ist. Das durch die Feder 10 an die Bramme 1 angedrückte Schneidwerkzeug 2 paßt sich der Oberfläche des Metallteils 4 besser an als ein fest auf der Welle 1 verschraubtes Schneidwerkzeug 2.

In Fig. 3 ist ersichtlich, wie die Schneidwerkzeuge 2 auf der Welle 1 angeordnet sein können. Wichtig ist dabei, daß die Schneidwerkzeuge 2 versetzt angeordnet sind, so daß jeweils ein, zwei, drei oder noch mehr Schneidwerkzeuge 2 in einer Ebene liegen. Dadurch, daß immer ein - wenn auch unterschiedlich großer - Zwischenraum zwischen zwei Schneidwerkzeugen 2 derselben Schnittebene besteht, werden Metallstücke von etwa der Breite eines Schneidwerkzeuges 2 abgetrennt. Die dargestellten Transportnoppen 3 dienen zum Abstützen der Metallteile 4 bei deren Transport und Bearbeitung.

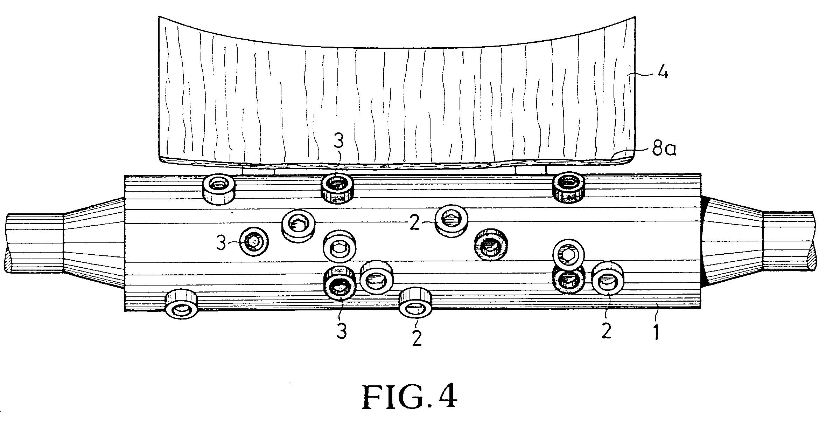

Aus Fig. 4 ist ein weiterer Vorteil dieser Schneidwerkzeuganordnung ersichtlich: Ein gebogenes Metallteil 4 ist hier immer nur mit zwei Schneidwerkzeugen 2 in Kontakt, was eine einwandfreie Brennbartentfernung deutlich erleichtert.

**Patentansprüche**

1. Vorrichtung zum Entfernen von Brennbärten an Brennschneidkanten von Metallteilen, insbesondere Brammen, Blöcken, Knüppeln oder anderem Halbzeugmaterial, mit einer mit Werkzeugen versehenen drehangetriebenen Welle, dadurch **gekennzeichnet**, daß die Werkzeuge als am Umfang der Welle (1) angeordnete Schneidwerkzeuge (2) ausgebildet sind.

2. Vorrichtung nach Anspruch 1, dadurch **gekennzeichnet**, daß die Welle (1) senkrecht zur Unterseite der Metallteile (4) verstellbar ist.

3. Vorrichtung nach Anspruch 1 oder 2, dadurch **gekennzeichnet,** daß die Schneidwerkzeuge (2) als radial auf der Welle (1) angeordnete zylindrische Körper ausgebildet sind.

4. Vorrichtung nach Anspruch 1 oder 2, dadurch **gekennzeichnet**, daß die Schneidwerkzeuge (2) als radial auf der Welle (1) angeordnete rechteckige Körper ausgebildet sind.

5. Vorrichtung nach Anspruch 1 oder 2, dadurch **gekennzeichnet**, daß die Schneidwerkzeuge (2) als radial auf der Welle (1) angeordnete längliche Körper ausgebildet sind.

6. Vorrichtung nach Anspruch 1 oder 2, dadurch **gekennzeichnet**, daß die Schneidwerkzeuge (2) als radial auf der Welle (1) angeordnete quadratische Körper ausgebildet sind.

7. Vorrichtung nach Anspruch 1, 2 oder 3, dadurch **gekennzeichnet**, daß auf der Welle (1) Transportnoppen (3) vorgesehen sind.

8. Vorrichtung nach einem oder mehreren der vorhergehenden Ansprüche, dadurch **gekennzeichnet**, daß die Drehgeschwindigkeit der Welle (1) regelbar ist.

9. Vorrichtung nach einem oder mehreren der vorhergehenden Ansprüche, dadurch **gekennzeichnet**, daß die Schneidwerkzeuge (2) versetzt auf der Welle (1) angeordnet sind.

10. Vorrichtung nach einem oder mehreren der vorhergehenden Ansprüche, dadurch **gekennzeichnet**, daß die Schneidwerkzeuge (2) mit einer Federung (10) versehen sind.

11. Vorrichtung nach einem oder mehreren der vorhergehenden Ansprüche, dadurch **gekennzeichnet**, daß die Welle (1) in axialer Richtung pulsierend oder kontinuierlich verschiebbar ist.

FIG.1

EP 0 485 756 A1

FIG.2

FIG.3

FIG. 4

Europäisches
Patentamt

**EUROPÄISCHER RECHERCHENBERICHT**

Nummer der Anmeldung

EP    91 11 7709

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-C-489 517 (BAUER)<br>* Seite 2, Zeile 21 - Zeile 109; Abbildung 1 *<br>--- | 1,2,8 | B23D79/04 |
| A | DE-C-310 913 (HANNOVERSCHE MASCHINENBAU AG)<br>* Seite 1, Zeile 40 - Zeile 50; Abbildungen 1,2 *<br>--- | 1-3,9 | |
| A | US-A-1 714 212 (CLAYBOURN)<br>--- | | |
| A | US-A-1 432 579 (VAUCLAIN)<br><br>----- | | |

**RECHERCHIERTE SACHGEBIETE (Int. Cl.5)**

B23D
B23C

Der vorliegende Recherchenbericht wurde für alle Patentansprüche erstellt

| Recherchenort | Abschlußdatum der Recherche | Prüfer |
|---|---|---|
| DEN HAAG | 12 FEBRUAR 1992 | BOGAERT. F.L. |